# NEUE EUROPÄISCHE PATENTSCHRIFT

(11) **EP 1 338 635 B2**
(45) Veröffentlichungstag und Bekanntmachung des Hinweises auf die Entscheidung über den Einspruch: **14.10.2020**
(45) Hinweis auf die Patenterteilung: 18.06.2008
(21) Anmeldenummer: 03002388.1
(22) Anmeldetag: 04.02.2003
(51) Int. Cl.: C09J 175/08, C08G 18/10, C08G 18/66, C08G 18/40, C08G 18/63, C08F 283/00, C08G 18/08, C09D 175/06, C09D 175/04, C08G 18/12, C14C 11/00, C08G 18/62, C08G 18/48, C08G 18/67, B32B 27/40, C08G 18/81

(54) **Polyurethan-Zusammensetzungen mit geringem Anteil an Diisocyanatmonomer(en)**
Polyurethan compositions with low content of diisocyanat monomer(s)
Compositions du polyuréthanne avec une contenance peu importante des diisocyanate(s) monomerique(s)

(30) Priorität: 22.02.2002 DE 10207571; 09.04.2002 DE 10215641; 11.06.2002 DE 10225982
(43) Veröffentlichungstag der Anmeldung: 27.08.2003
(73) Patentinhaber: Jowat AG, 32758 Detmold (DE)
(72) Erfinder: Hippold, Theodor, 32108 Bad Salzuflen (DE); Guse, Dieter, Dr., 32584 Löhne (DE); Terfloth, Christian, Dr., 32760 Detmold (DE)
(74) Vertreter: Von Rohr Patentanwälte Partnerschaft mbB

(56) Entgegenhaltungen:
- EP-A- 1 164 150
- EP-A- 1 213 310
- EP-A- 1 253 159
- EP-A1- 1 253 159
- WO-A-97/39836
- WO-A-99/28363
- WO-A1-01/40342
- WO-A1-03/006521
- WO-A1-03/055929
- WO-A2-02/48227
- DE-A- 19 959 653
- DE-A1- 19 957 351

## Beschreibung

Die vorliegende Erfindung betrifft Verfahren zur Herstellung von Polyurethan-Zusammensetzungen mit geringem Anteil an Diisocyanatmonomer(en). Die nach diesen Verfahren herstellbaren Polyurethan-Zusammensetzungen eignen sich zur Verwendung insbesondere in Klebeverfahren (z. B. in Schmelzklebeverfahren) oder zu Beschichtungszwecken.

Zur Herstellung von Polyurethan-Zusammensetzungen sind viele unterschiedliche Verfahren bekannt. Dabei sind jedoch meistens mehr als zwei Verfahrensschritte notwendig, um auf die gewünschte Zusammensetzung zu kommen. Je komplexer das Verfahren und je größer die Anzahl der Bestandteile ist, desto fehleranfälliger und teurer wird das Herstellungsverfahren.

Polyurethan-Zusammensetzungen gibt es in großer Vielzahl. Bei industriellen Anwendungen sind sie regelmäßig auf spezielle Applikationen nach Vorgabe durch den Anwender abgestimmt, wobei insbesondere feuchtigkeitsreaktive Polyurethan-Zusammensetzungen als Schmelzkleber zur Anwendung kommen.

Der Einsatz dieser Polyurethan-Zusammensetzungen ist jedoch nicht unproblematisch, weil die enthaltenen monomeren Diisocyanate toxisch, gesundheitsschädlich, reizend und sensibilisierend sind, so daß bei der Verarbeitung der Polyurethan-Zusammensetzungen darauf geachtet werden muß, daß die dampfdruckabhängige maximale Arbeitsplatzkonzentration (MAK) der Isocyanate nicht überschritten wird. Die MAK-Kommission hat sogar verschiedene monomere Isocyanate in die Kategorie 3 "Stoffe mit begründetem Verdacht auf kreiserzeugendes Potential" des Abschnitts III (Krebserregende Arbeitsstoffe) der MAK-Liste eingestuft. Die Berufsgenossenshaft Chemie hat eigens ein Merkblatt "Polyurethan-Herstellung und Verarbeitung/Isocyanate" mit Hinweisen zum sicheren Umgang mit Isocyanaten herausgegeben.

Die Handhabung monomerer Diisocyanate und Zusammensetzungen, die monomere Diisocyanate enthalten, erfordert demnach besondere Sorgfalt, und die monomeren Diisocyanate bzw. Zusammensetzungen, die monomere Diisocyanate enthalten, sind nach den Vorschriften der Gefahrstoffverordnung entsprechend zu kennzeichnen. Bei einem sehr geringen Gehalt an monomeren Diisocyanaten (weniger als 0,1 Gew.-%) in der Zusammensetzung kann die Pflicht zur Crefahrstoffkennzeichnung dagegen entfallen.

Die DE 199 57 351 A1 beschreibt die Herstellung einer reaktiven Polyurethan-Kleb-/Dichtstoffzusammensetzung mit einem niedrigen Gehalt an Isocyanatmoriomeren, wobei eine Diolkomponente mit einem monomeren Diisocyanat umgesetzt wird und aus diesem Umsetzungsprodukt das nicht umgesetzte monomere Diisocyanat durch Umkristallisation und/oder Waschen mit einem aprotischen Lösemittel entfernt wird und das so entstandene hochmolekulare Diisocyanat mit einem Polyol umgesetzt wird. Dieses Verfahren hat den Nachteil, daß das überschüssige monomere Diisocyanat entfernt werden muß, um auf einen geringen Gehalt an monomeren Diisocyanat in der Polyurethan-Zusammensetzung zu kommen.

Die DE 199 31 997 A1 beschreibt ein Polyurethanbindemittel mit einem niedrigen Gehalt an leichtflüchtigen Restmonomeren und verbesserter Gleitmittelhaftung und ein mehrstufiges Verfahren zu seiner Herstellung. Bei dem mehrstufigen Verfahren werden unterschiedliche difunktionelle Isocyanate und Polyolkomponenten eingesetzt. Dadurch ist das beschriebene Verfahren sehr teuer und fehleranfällig, da bei der Herstellung genau darauf geachtet werden muß, zu welchem Zeitpunkt welche Komponenten in welchen Mengen zum Einsatz kommen.

Die EP 1 253 159 A1 betrifft eine polyurethanbasierte Klebstoffzusammensetzung mit einem Polyurethanprepolymer, welches als Reaktionsprodukt eines Polyisocyanats mit einer Polyolzusammensetzung und einem Härter für die Isocyanatgruppen erhalten wird, wobei das Polyurethanprepolymer im wesentlichen aus mindestens 80 Gew.-% eines sogenannten perfekten Prepolymers besteht und weniger als 2 Gew,-% freies Polyisocyanatmonomer enthält. Ein perfektes Prepolymer gemäß dieser Druckschrift wird im Hinblick auf seine Stöchiometrie dahingehend verstanden, daß es aus n Molekülen Polyisocyanat und einem Polyolmolekül besteht, wobei "n" der Anzahl der OH-Gruppen des Polyols entspricht. Die gemäß dieser Druckschrift eingesetzten Polyurethanprepolymere sind handelsübliche Produkte, zu deren Herstellung in D1 keine weiteren Einzelheiten ausgeführt sind.

Die EP 1213 310 A1 betrifft spezielle Polyisocyanatzusammensetzungen mit einem NCO-Gruppengehalt von mehr als 15 %, welche durch Mischen von 1 bis 30 Gew.-% eines Prepolymers von Diphenylmethandiisocyanat mit einem NCO-Gruppengehalt von 2 bis 20 %, erhältlich durch Umsetzung von Diphenylmethandiisocyanat mit einem speziellen Polyetherpolyol, und 70 bis 99 % eines Polymethylenpoly(phenylisocyanats) mit einem NCO-Gruppengehalt von 30 bis 33 % und einem Monomergehalt von 40 bis 90 % erhalten wird.

Die EP 1 164 150 A1 beschreibt ein Verfahren zur Herstellung eines Poly-(urethan/harnstoff-Additionspolymers in Form von Kompositpartikeln, welche durch einen komplexen, zahlreiche Verfahrensschritte umfassenden Verfahrensablauf hergestellt werden. Das im ersten Verfahrensschritt aus der Reaktion von Diol und Diisocyanat erhaltene Polyurethan, welches noch beträchtliche Mengen an Diisocyanatmonomeren enthält, wird ohne weitere Entfernung der Diisocyanatmonomere weiter umgesetzt.

Die DE 199 59 653 A1 beschreibt ein Verfahren zur Herstellung von wäßrigen Dispersionen auf Basis von Polyurethanen in dispergierter Form, wobei in einem ersten Verfahrensschritt spezielle Makrodiole mit speziellen Diisocyanaten in einem spezifischen Mengenverhältnis umgesetzt werden, wobei der erste Verfahrensschritt nur unvollständig durchgeführt wird, bis sich der NCO-Gehalt der Reaktionsmischung auf maximal 20 % des ursprünglichen Wertes verringert hat und in einem nachfolgenden Verfahrensschritt das gebildete Reaktionsprodukt aus dem ersten Verfahrensschritt mit weiteren Komponenten, insbesondere isocyanatreaktiven Verbindungen mit Hydroxyl- und/oder Aminogruppen, umgesetzt wird, wobei man das Polyurethanendprodukt oder ein in einer Zwischenstufe gebildetes Prepolymer in Wasser dispergiert und im Falle der Dispergierung des Prepolymers anschließend die Reaktion zum Polyurethan fortsetzt.

Die WO 99/28363 A1 betrifft Polyurethanschmelzklebstoffzusammensetzungen, welche bei Raumtemperatur fest sind und feuchtigkeitsvernetzend ausgebildet sind, wobei die Klebstoffzusammensetzungen neben einem Reaktionsprodukt aus der Reaktion eines ersten Polyisocyanats mit einem Polymer niedrigen Molekulargewichts, welches ethylenisch ungesättigte Monomere umfaßt und aktive Wasserstoffgruppen aufweist, mindestens ein Polyurethanprepolymer mit freien Isocyanatgruppen aus der Herstellung mindestens eines Polyols aus der Gruppe von Polyetherdiolen, Polyethertriolen, Polyesterpolyolen, aromatischen Polyolen und deren Mischungen mit mindestens einem zweiten Polyisocyanat sowie gegebenenfalls verschiedene Additive enthält.

Schließlich betrifft die WO 97/39836 A1 eine schäumbare Polyurethan-Zusammensetzung zur Herstellung eines festen Polyurethanschaums, wobei die Zusammensetzung eine isocyanatreaktive Ausgangsverbindung in Form eines Polyetherpolyols oder eine aromatisches Polyesterpolyol sowie ein hiermit reaktives Polyisocyanat zusammen mit einem Katalysator für die Polyurethanreaktion und einem Aufschäumreagenz und speziellen organischen Additiven umfaßt. Es soll in situ, d. h. bei der Anwendung unter zusammenbringen der einzelnen Komponenten, ein Polyurethan in Form eines Schaums bereitgestellt werden, der als Kernmaterial einer Verbundschaumstruktur dienen kann.

Eine Aufgabe der vorliegenden Erfindung besteht somit darin, Verfahren zur Herstellung einer Polyurethan-Zusammensetzung mit geringem Anteil an Diisocyanatmonomer(en) bereitzustellen.

### ERSTE AUSFÜHRUNGSFORM :

Die der Erfindung zugrundeliegende Aufgabe wird erfindungsgemäß - gemäß einer **ersten Ausführungsform** - durch ein Verfahren gemäß Anspruch 1 gelöst. Weitere, vorteilhafte Ausgestaltungen und Weiterbildungen sind Gegenstand der diesbezüglichen Verfahrensunteransprüche (Ansprüche 2 bis 14).

Gegenstand der vorliegenden Erfindung gemäß einer **ersten Ausführungsform** ist somit ein Verfahren zur Herstellung einer Polyurethan-Zusammensetzung mit einem geringen Anteil an Diisocyanatmonomer(en), wobei in einem ersten Verfahrensschritt (a) mindestens ein isocyanatreaktives Polymer, welches mindestens zwei isocyanatreaktive Gruppen pro Molekül besitzt und ein mittleres Molekulargewicht von 2.000 bis 8.000 g/mol aufweist, mit mindestens einem monomeren Diisocyanat umgesetzt wird und wobei in einem zweiten Verfahrensschritt (b) anschließend das oder die in Schritt (a) erhaltenen Umsetzungsprodukte mit mindestens einem isocyanatterminierten Prepolymer, das im wesentlichen frei ist von Diisocyanatmonomeren, vermischt werden in der Weise, daß die resultierende Gesamtzusammensetzung weniger als 0,1 Gew.-% monomeres Diisocyanat, bezogen auf die Gesamtzusammensetzung, enthält, wobei ein isocyanatterminiertes Prepolymer mit höchstens 0,1 Gew.-% monomerem Diisocyanat bezogen auf das isocyanatterminierte Prepolymer, eingesetzt wird, welches einen Gehalt an freien NCO-Gruppen von bis zu 3 Gew.-% aufweist.

Das erfindungsgemäße Verfahren gemäß der ersten Ausführungsform besitzt den Vorteil, daß die gesundheitsgefährdenden monomeren Diisocyanate lediglich im ersten Schritt zum Einsatz kommen, in dem sie aber zusammen mit mindestens einem isocyanatreaktiven Polymer umgesetzt werden, so daß bei der anschließenden Vermischung des Umsetzungsprodukts mit einem isocyanatterminierten Prepolymer auf monomere Diisocyanate verzichtet werden kann, ohne daß die hergestellte Polyurethan-Zusammensetzung etwas von ihrer Reaktivität oder Qualität verliert. Auf diese Weise führt das beschriebene Verfahren zu einer gemäß Gefahrstoffverordnung kennzeichnungsfreien Polyurethan-Zusammensetzung.

In dem ersten Verfahrenschritt können ein Umsetzungsprodukt oder mehrere unterschiedliche Umsetzungsprodukte entstehen, so daß der verwendete Begriff "Umsetzungsprodukt" den Singular und den Plural umfaßt. Für das im ersten Verfahrensschritt zum Einsatz kommende Diisocyanat, von dem auch mehrere unterschiedliche eingesetzt werden können, gilt ebenfalls, daß der verwendete Begriff "Diisocyanat" sowohl den Singular als auch den Plural umfaßt.

Als Diisocyanatkomponente ist erfindungsgemäß beispielsweise auch ein Gemisch aus 4,4'-Diisocyanatodiphenylmethan und 2,4'-Diisocyanatodiphenylmethan geeignet, vorzugsweise mit einem Gehalt an 2,4'-Diisocyanatodiphenylmethan von mehr als 20 Gew.-%, insbesondere mehr als 30 Gew.-%, bevorzugt mehr als 40 Gew.-%, ganz besonders bevorzugt mehr als 50 Gew.-%, bezogen auf das Diisocyanatgemisch. Beispiele für erfindungsgemäß geeignete Gemische aus 4,4'-Diisocyanatodiphenylmethan und 2,4'-Diisocyanatodiphenylmethan sind das von der Bayer AG unter der Bezeichnung Desmodur® 2460 M und das von der Elastogran GmbH, Lernförde, unter der Bezeichnung Lupranat® MI vertriebene, bei Raumtemperatur flüssige Produktgemisch.

Die Verwendung von unsymmetrisch substituierten Diisocyanaten mit NCO-Gruppen unterschiedlieher Reaktivität, wie insbesondere das 2,4'-Diisocyanatodiphenylmethan, hat den Vorteil, daß die in 2-Position befindliche NCO-Gruppe - im Gegensatz zu der NCO-Gruppe in 4'-Position - relativ reaktionsträge und folglich in der erfindungsgemäßen Polyurethan-Zusammensetzung über einen längeren Zeitraum stabil vorhanden ist. Generell werden daher gerne unsymmetrisch substituierte Diisocyanate mit jeweils zwei NCO-Gruppen unterschiedlicher Reaktivität eingesetzt. Ein Beispiel für ein erfindungsgemäß geeignetes 2,4'-Diisocyanatodiphenylmethan ist das von der Elastogran GmbH, Lernförde, unter der Bezeichnung Lupranat® MCI vertriebene, bei Raumtemperatur als kristalliner Feststoff vorliegende Produkt.

Gemäß einer weiteren Ausgestaltung der vorliegenden Erfindung nach der ersten Ausführungsform des erfindungsgemäßen Verfahrens kann als Diisocyanat ein maskiertes oder blockiertes Diisocyanat verwendet werden, welches insbesondere unter Wärme- und/oder Feuchtigkeitseinwirkung die blockierenden oder maskierenden Gruppen abspaltet. Blockierte oder maskierte Diisocyanate dieser Art sind dem Fachmann aus dem Stand der Technik an sich bekannt. Erfindungsgemäß geeignete blockierte oder maskierte Diisocyanate wird erje nach Anwendung entsprechend auswählen.

Gemäß einer weiteren Ausgestaltung der vorliegenden Erfindung gemäß der ersten Ausführungsform des erfindungemäßen Verfahrens kann als Diisocyanat auch ein sogenanntes verkapseltes oder oberflächendesaktiviertes Diisocyanat verwendet werden, d. h. ein Diisocyanat mit retardierter Reaktivität. Verkapselte oder oberflächendesaktivierte Disocyanate sind dem Fachmann aus dem Stand der Technik geläufig. Beispielsweise kann verwiesen werden auf die EP0 204 970A2 bzw. die entsprechende US-A-4 888 124, die WO 99/58590 A1 bzw. die entsprechende DE 198 20 270 A1 oder aber auf die EP 0 922 720A1, deren gesamter Offenbarungsgehalt hiermit durch Bezugnahme eingeschlossen ist. Als Desaktivierungsmittel werden insbesondere Verbindungen mit hydrophilen Gruppen wie insbesondere Aminogruppen oder Hydroxylgruppen verwendet, die mit den freien Isocyanatgruppen des Diisocyanats reagieren können und somit eine Art Oberflächenhülle auf den Diisocyanaten ausbilden, welche die Diisocyanate zunächst desaktiviert (z. B. Amine, Diamine, Polyamine, Alkohole, Diole, Polyole oder die entsprechenden Thioverbindungen). Insbesondere wird im Rahmen der vorliegenden Erfindung das Desaktivierungsmittel in Art und Menge derart ausgewählt, daß die Verkapselung oder Oberflächendesaktivierung vorzugsweise bei Temperaturen oberhalb der Raumtemperatur, aufgebrochen wird.

Außerdem kann die Umsetzung des isocyanatreaktiven Polymers mit dem monomeren Diisocyanat in Schritt (a) des erfindungsgemäßen Verfahrens in Gegenwart mindestens eines Katalysators und gegebenenfalls nichtisocyanatreaktiver Bestandteile, wie z. B. nichtisocyanatreaktiver Polymere, Harze, Wachse, Füllstoffe, Additive und/oder Lösemittel, ablaufen. Als erfindungsgemäß geeignete Katalysatoren können Katalysatoren verwendet werden, wie sie aus der Polyurethanchemie gängig und bekannt sind.

In dem zweiten Verfahrensschritt (b) wird das aus dem ersten Verfahrensschritt (a) erhaltene Umsetzungsprodukt mit einem imwesentlichen monomerfreien isocyanatterminierten Prepolymer vermischt. Der Ausdruck "imwesentlichen monomerfrei" meint, daß das isocyanatterminierte Prepolymer höchstens 0,1 Gew.-% an Diisocyanatmonomer enthält und besonders bevorzugt frei ist von Diisocyanatmonomer.

Erfindungsgemäß geeignete, monomerfreie isocyanatterminierte Prepolymere leiten sich beispielsweise von MOis und/oder TDIs ab. Beispiele für erfindungsgemäß geeignete, monomerfreie isocyanatterminierte Prepolymere, die aufgrund ihres geringen Restmonomergehalts gemäß Gefahrstoffverordnung kennzeichnungsfrei erhältlich sind, sind die von Dow Chemicals unter der Bezeichnung "Vorastar®" (z. B. Vorastar® 1500, Vorastar® 1505, Vorainer® 1022 und Voramer® 1020) vertriebenen Produkte oder das von der BAYER AG unter der Bezeichnung "Desmodur® VPKA 8697"vertriebene Produkt.

Die nach der ersten Ausführungsform des erfindungsgemäßen Verfahrens hergestellte Polyurethan-Zusammensetzung eignet sich zur Verwendung in einem Klebeverfahren, insbesondere einem Schmelzklebeverfahren, sowie zu Beschichtungszwecken.

Unter Verwendung der nach der ersten Ausführungsform des erfindungsgemäßen Verfahrens hergestellten Polyurethan-Zusammensetzungen lassen sich Klebstoffe und Beschichtungsmassen herstellen, welche diese Polyurethan-Zusammensetzungen enthalten.

### ZWEITE AUSFÜHRUNGSFORM:

Die der Erfindung zugrundeliegende Aufgabe wird erfindungsgemäß - gemäß einer **zweiten Ausführungsform** - durch ein Verfahren gemäß Anspruch 15 gelöst. Weitere, vorteilhafte Ausgestaltungen und Weiterbildungen sind Gegenstand der diesbezüglichen Verfahrensunteransprüche (Ansprüche 16 bis 27).

Gegenstand der vorliegenden Erfindung gemäß einer**zweiten Ausführungsform** ist somit ein Verfahren zur Herstellung einer Polyurethan-Zusammensetzung mit einem geringen Gehalt an Diisocyanatmonomer(en), wobei mindestens ein isocyanatreaktives Polymer, welches mindestens zwei isocyanatreaktive Gruppen pro Molekül besitzt und ein mittleres Molekulargewicht von 2.000 bis 8.000 g/mol aufweist, mit mindestens einem isocyanatterminierten Prepolymer, das im wesentlichen frei ist von Diisocyanatmonomer(en), umgesetzt wird in der Weise, daß die resultierende Polyurethan-Zusammensetzung weniger als 0,1 Gew.-% monomeres Diisocyanat, bezogen auf die Gesamtzusammensetzung, enthält, wobei ein isocyanatterminiertes Prepolymer mit weniger als 0,1 Gew.-% monomerem Diisocyanat, bezogen auf das isocyanatterminierte Prepolymer, eingesetzt wird, welches einen Gehalt an freien NCO-Gruppen von bis zu 25 Gew.-% enthält, wobei das isocyanatterminierte Prepolymer ausgewählt ist aus der Gruppe von MDI-Prepolymeren, TDI-Prepolymeren und MDI/TDI-Prepolymeren und wobei die Viskosität des isocyanatterminierten Prepolymers bei 20 °C mindestens 1.500 mPas beträgt,
wobei die Umsetzung des isocyanatreaktiven Polymers mit dem isocyanatterminierten Prepolymer in Gegenwart nichtisocyanatreaktiver Bestandteile erfolgt, die ausgewählt sind aus der Gruppe von nichtisocyanatreaktiven Polymeren, Harzen, Wachsen, Füllstoffen, Additiven und/oder Lösemitteln, und
wobei nach der Umsetzung des isocyanatreaktiven Polymers mit dem isocyanatterminierten Prepolymer dem oder den Umsetzungsprodukt(en) weiteres isocyanatterminiertes Prepolymer zugesetzt wird.

Das erfindungsgemäße Verfahren gemäß der zweiten Ausführungsform besitzt den entscheidenden Vorteil, daß gesundheitsgefährdende monomere Diisocyanate überhaupt nicht zum Einsatz kommen und allenfalls in dem als Ausgangsstoff eingesetzten isocyanatterminierten Prepolymerals geringfügige Verunreinigung aus dessen Herstellungsprozess vorhanden sein können. Mit anderen Worten ist es durch das erfindungsgemäße Verfahren gelungen, beider Herstellungvon Polyurethan-Zusammensetzungen gänzlich auf die Verwendung monomerer Diisocyanate als Ausgangsstoffe zu verzichten, und zwar ohne daß die hergestellte Polyurethan-Zusammensetzungen etwas von ihrer Reaktivität oder Qualität verlieren. Auf diese Weise führt das beschriebene Verfahren gemäß der zweiten Ausführungsform zu gemäß Gefahrstoffverordnung kennzeichnungsfreien Polyurethan-Zusammensetzungen.

Je nach eingesetzten Ausgangsmaterialien können beider Umsetzung ein Umsetzungsprodukt oder mehrere unterschiedliche Umsetzungsprodukte entstehen, so daß der verwendete Begriff "Umsetzungsprodukt" den Singular wie den Plural umfaßt.

Die Umsetzung des isocyanatreaktiven Polymers mit dem isocyanatterminierten Prepolymer wird gegebenenfalls in Gegenwart mindestens eines Katalysators und/oder in Gegenwart nichtisocyanatreaktiver Bestandteile, wie z. B. nichtisocyanatreaktiver Polymere, Harze, Wachse, Füllstoffe, Additive und/oder Lösemittel etc., durchgeführt. Als erfindungsgemäß geeignete Katalysatoren können Katalysatoren verwendet werden, wie sie aus der Polyurethanchemie gängig und bekannt sind.

Das erfindungsgemäß eingesetzte isocyanatterminierte Prepolymer ist im wesentlichen frei von Diisocyanatmonomer(en) bzw. monomeren Diisocyanat(en) und wird daher auch in der vorliegenden Anmeldung synonym als "im wesentlichen monomerfrei" bezeichnet. Der Ausdruck "im wesentlichen monomerfrei" meint insbesondere, daß das isocyanatterminierte Prepolymer weniger als 0,1 Gew.-% an Diisocyanatmonomer(en) enthält und besonders bevorzugt vollkommen frei ist von Diisocyanatmonomer(en),

Im Rahmen der vorliegenden Erfindung werden für die Umsetzung mit den isocyanatreaktiven Polymeren insbesondere solche im wesentlichen monomerfreien, isocyanatterminierten Prepolymere als Ausgangsstoffe bevorzugt, die einen möglichst hohen Gehalt an NCO-Gruppen aufweisen. Zum einen bietet dies die Möglichkeit, die Endprodukte, d. h. die resultierenden Polyurethan-Zusammensetzungen, quasi maßzuschneidern, insbesondere in bezug auf die Auswahl an Art und/ oder Menge des isocyanatreaktiven Polymers. Denn je mehr freie NCO-Gruppen das im wesentlichen monomerfreie, isocyanatterminierte Prepolymer enthält, desto mehr Anknüpfungsstellen bzw. Reaktionszentren für die Umsetzung mit dem isocyanatreaktiven Polymer sind vorhanden, wodurch die Eigenschaften des oder der Umsetzungsprodukte gezielt gesteuert bzw. beeinflußt werden können. Zum anderen führt ein möglichst hoher Gehalt an NCO-Gruppen im isocyanatterminierten Prepolymer im allgemeinen zu End- bzw. Umsetzungsprodukten, d. h. erfindungsgemäßen Polyurethan-Zusammensetzungen, mit hohem Anteil bzw. Gehalt an freien NCO-Gruppen (im allgemeinen zwischen 0,5 bis 5 Gew.-%), welche beispielsweise besonders gut für Klebe- und/oder Beschichtungszwecke geeignet sind.

Erfindungsgemäß geeignete, monomerfreie isocyanatterminierte Prepolymere leiten sich beispielsweise von MOis und/oder TDIs ab. Beispiele für erfindungsgemäß geeignete, monomerfreie isocyanatterminierte Prepolymere, die aufgrund ihres geringen Restmonomergehalts gemäß Gefahrstoffverordnung kennzeichnungsfrei sind und im Handel erhältlich sind, sind die verschiedenen von Dow Chemicals unter der Bezeichnung 'Vorastar®" vertriebenen Produkte (= isocyanatterminierte Prepolymere), z. B. Vorastar® 1500, Vorastar® 1505, Voramer® 1022 und Voramer® 1020, oder das von der BAYER AG unter Bezeichnung Desmodur® VPKA 8697 vertriebene Produkt.

Im Rahmen des erfindungsgemäßen Verfahrens gemäß der zweiten Ausführungsform wird nach der Umsetzung des isocyanatreaktiven Polymers mit dem isocyanatterminierten Prepolymer dem oder den Umsetzungsprodukt(en) weiteres isocyanatterminiertes Prepolymer zugesetzt, d. h. mit anderen Worten wird die durch Umsetzung des isocyanatreaktiven Polymers mit dem isocyanatterminierten Prepolymer erhältliche Polyurethan-Zusammensetzung durch Zugabe von weiterem isocyanatterminiertem Prepolymer verdünnt. Dies ist insbesondere dann gewünscht, wenn man beispielsweise die rheologischen Eigenschaften der Polyurethan-Zusammensetzung in gewünschter Art und Weise einstellen möchte und/oder wenn man den Gehalt an freien NCO-Gruppen der Polyurethan-Zusammensetzung auf einen bestimmten Wert einstellen möchte.

Die nach der zweiten Ausführungsform des erfindungsgemäßen Verfahrens hergestellte Polyurethan-Zusammensetzung eignet sich zur Verwendung in einem Klebeverfahren, insbesondere einem Schmelzklebeverfahren, sowie zu Beschichtungszwecken.

Unter Verwendung der nach der zweiten Ausführungsform des erfindungsgemäßen Verfahrens hergestellten Polyurethan-Zusammensetzungen lassen sich Klebstoffe und Beschichtungsmassen herstellen, welche diese Polyurethan-Zusammensetzungen enthalten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der folgenden Ausführungsbeispiele veranschaulich, welche die vorliegende Erfindung jedoch nicht beschränken.

### AUSFÜHRUNGSBEISPIELE

### Beispiel 1 (Beispiel gemäß erster Ausführungsform)

### Feuchtigkeitsvernetzende monomerfreie, kennzeichnungsfreie Polyurethan-Zusammensetzungen gemäß der ersten Ausführungsform der vorliegenden Erfindung

Hydroxylpolyester und nichtisocyanatreaktive Bestandteile (Polymere, Harze, Füllstoffe, Additive) werden mit monomeren Isocyanaten (aromatisch oder aliphatisch) so umgesetzt, daß nur ein geringer Überschuß an Isocyanatgruppen (NCO-Gruppen) vorhanden ist (max. 0,5 %). Normalerweise steigt die Viskosität bei diesem Mischungsverhältnis so stark an, daß das Material nicht mehr wie ein Schmelzklebstoff gehandhabt werden kann. Wenn man aber nach Zugabe der Isocyanat-Monomere zusätzlich ein monomerfreies Isocyanatprepolymer, das bei der Herstellung zuvor entmonomerisiert wurde, zugibt, so erhält man einen niedrigviskosen Schmelzklebstoff, der nur noch eine geringe Menge an monomeren Isocyanaten enthält.

### Durchführung:

- 37,5 g Polyester 1 Dynacoll® 7250 (Degussa AG) (OHZ: 21 mg KOH/g) und
- 37,5 g Polyester 2 Dynacoll® 7360 (Degussa AG) (OHZ: 32 mg KOH/g) und
- 25,0 g Harz Novarez® TM 80 (VFT AG)
werden mit 5,98 g Diisocyanat Lupranat® MCI (Elastogran) (33,6 % NCO) in der Schmelze bei 140 bis 150 °C umgesetzt. Der theoretische Isocyanatgehalt beträgt 0,49 %.

Anschließend verdünnt man das Ganze mit 31,8 g eines monomerfreien Isocyanatprepolymers Vorastar® B1500 (Dow) (NCO-Gehalt 3,0 %).

Man erhält eine niedrigviskose Polyurethan-Zusammensetzung nach der vorliegenden Erfindung, die weniger als 0,1% monomeres Diisocyanat (MDI) enthält und sich insbesondere als Klebstoff (Hotmelt) eignet.

### Beispiel 2 (Beispiel gemäß zweiter Ausführungsform)

### Feuchtigkeitsvernetzende, monomerfreie kennzeichnungsfreie Polyurethan-Zusammensetzungen gemäß der zweiten Ausführungsform der vorliegenden Erfindung

Isocyanatreaktive Polymere (Hydroxylpolyester) und nichtisocyanatreaktive Bestandteile (Polymere, Harze, Füllstoffe, Additive) werden mit im wesentlichen monomerfreien isocyanatterminierten Prepolymeren (Gehalt an Diisocyanatmonomeren <0,1 Gew.-%) in der Schmelze umgesetzt. Die resultierenden Polyurethan-Zusammensetzungen enthalten weniger als 0,1 Gew.-% Diisocyanatmonomere und mindestens 0,5 Gew.-% freie NCO-Gruppen, jeweils bezogen auf die Gesamtzusammensetzungen. Die resultierenden, relativ niedrigviskosen Polyurethan-Zusammensetzungen sind insbesondere als Schmelzklebstoff oder Beschichtungsmaterial verwendbar

### Durchführung:

- 37,5 g Polyester 1 Dynacoll® 7250 (Degussa AG) (OHZ: 21 mg KOH/g) und
- 37,5 g Polyester 2 Dynacoll® 7360 (Degussa AG) (OHZ: 32 mg KOH/g) und
- 25,0 g Harz Novarez® TM 80 (VFT AG)
werden mit 50,0 g Desmodur® VPKA 8697 der Bayer AG Leverkusen (TDIbasiertes Prepolymer, NCO-Gehalt ca. 8,5%, Monomergehalt <0,1 %) in der Schmelze bei 140 bis 150 °C umgesetzt. Der theoretische Isocyanatgehalt beträgt 1,8 %.

Anschließend verdünnt man das Ganze noch mit weiterem Desmodur® VPKA 8697, insbesondere wenn man eine bestimmte Rheologie einstellen möchte.

Man erhält eine niedrigviskose Polyurethan-Zusammensetzung nach der vorliegenden Erfindung, die weniger als 0,1 % monomeres Diisocyanat (TDI) enthält und sich insbesondere als Klebstoff (Hotmelt) eignet.

## Patentansprüche

1. Verfahren zur Herstellung einer Polyurethan-Zusammensetzung mit einem geringen Anteil an Diisocyanatmonomer(en), wobei in einem ersten Verfahrensschritt (a) mindestens ein isocyanatreaktives Polymer, welches mindestens zwei isocyanatreaktive Gruppen pro Molekül besitzt und ein mittleres Molekulargewicht von 2.000 bis 8.000 g/mol aufweist, mit mindestens einem monomeren Diisocyanat umgesetzt wird und wobei in einem zweiten Verfahrensschritt (b) anschließend das oder die in Schritt (a) erhaltenen Umsetzungsprodukte mit mindestens einem isocyanatterminierten Prepolymer, das im wesentlichen frei ist von Diisocyanatmonomeren, vermischt werden in der Weise, daß die resultierende Gesamtzusammensetzung weniger als 0,1 Gew.-% monomeres Diisocyanat, bezogen auf die Gesamtzusammensetzung, enthält, wobei ein isocyanatterminiertes Prepolymer mit höchstens 0,1 Gew.-% monomerem Diisocyanat, bezogen auf das isocyanatterminierte Prepolymer, eingesetzt wird, welches einen Gehalt an freien NCO-Gruppen von bis zu 3 Gew.-% aufweist.

2. Verfahren nach Anspruch 1, **dadurch gekennzeichnet, daß** das isocyanatreaktive Polymer mindestens zwei isocyanatreaktive H-Atome pro Molekül besitzt, insbesondere wobei das isocyanatreaktive Polymer Hydroxyl-, Amino-, Carboxyl-, Carbonsäureanhydrid-, Mercapto-, Silyl- und/oder Carbonamidgruppen aufweisen kann.

3. Verfahren nach Anspruch 1 oder 2, **dadurch gekennzeichnet, daß** die Umsetzung des isocyanatreaktiven Polymers mit dem monomeren Diisocyanat in Schritt (a) in der Schmelze, insbesondere bei Temperaturen zwischen 50 und 160 °C, vorzugsweise zwischen 100 und 150 °C, erfolgt und/oder daß die Umsetzung des isocyanatreaktiven Polymers mit dem monomeren Diisocyanat in Schritt (a) in Gegenwart eines geringen Überschusses an Diisocyanat erfolgt, insbesondere wobei die Umsetzung in Schritt (a) derart durchgeführt wird, daß in der nach Durchführung von Schritt (a) vorhandenen Mischung höchstens 0,5 Gew.-% freie Isocyanatgruppen vorhanden sind.

4. Verfahren nach einem der voranstehenden Ansprüche, **dadurch gekennzeichnet, daß** das isocyanatreaktive Polymer ein mittleres Molekulargewicht von 2.000 bis 5.000 g/mol aufweist und/oder daß sich das isocyanatreaktive Polymer ableitet von isocyanatreaktiven Polymeren und/oder Copolymeren und/oder daß das isocyanatreaktive Polymer insbesondere ausgewählt ist aus der Gruppe von isocyanatreaktiven Polyestern, Polycaprolactonpolyestern, Polyethern, Polyurethanen, Polyamiden, Polytetrahydrofuranen, Polyacrylaten und Polymethacrylaten sowie deren Copolymeren und Mischungen, jeweils mit isocyanatreaktiven Gruppen, insbesondere Hydroxylfunktionen, und/oder daß das isocyanatreaktive Polymer ausgewählt ist aus der Gruppe von hydroxylfunktionalisierten Polymeren, insbesondere hydroxylfunktionalisierten Polyestern und/ oder hydroxylfunktionalisierten Polyethern, vorzugsweise mit mindestens zwei Hydroxylgruppen je Molekül.

5. Verfahren nach einem der voranstehenden Ansprüche, **dadurch gekennzeichnet, daß** die Umsetzung des isocyanatreaktiven Polymers mit dem monomeren Diisocyanat in Schritt (a) und/oder die in Schritt (b) durchgeführte Vermischung des in Schritt (a) erhaltenen Umsetzungsproduktes mit dem isocyanatterminierten Prepolymer in Gegenwart nichtisocyanatreaktiver Bestandteile erfolgt, die insbesondere ausgewählt sind aus der Gruppe von nichtisocyanatreaktiven Polymeren, Harzen, Wachsen, Füllstoffen, Additiven und/oder Lösemitteln und die vorzugsweise homogen über das oder die Umsetzungsprodukte und/oder das isocyanatterminierte Prepolymer verteilt oder hiermit vermischt sind.

6. Verfahren nach Anspruch 5, **dadurch gekennzeichnet, daß** die nichtisocyanatreaktiven Harze ausgewählt sind aus der Gruppe von aliphatischen, cyclischen oder cycloaliphatischen Kohlenwasserstoffharzen, Terpenphenolharzen, Cumaron-Indenharzen, α-Methylstyrolharzen, polymerisierten Tallharzestern oder Ketonaldehydharzen, insbesondere wobei die Harze eine niedrige Säurezahl, vorzugsweise mit Werten kleiner als 1 mg KOH/g, aufweisen können und/ oder daß die nichtisocyanatreaktiven Polymere ausgewählt sind aus der Gruppe von (i) Ethylen/Vinylacetat-Polymeren oder -Copolymeren, insbesondere solchen mit Vinylacetat-Gehalten zwischen 12 und 40 Gew.-%, insbesondere 18 bis 28 Gew.-%, und/oder mit Schmelzindices (MFIs, DIN 53735) von 8 bis 800, insbesondere 150 bis 500; (ii) Polyolefinen, insbesondere mit mittleren Molekulargewichten von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C; und (iii) (Meth-)Acrylaten wie Styrol(meth-)-acrylaten sowie Mischungen dieser Verbindungen, und/oder daß die nichtisocyanatreaktiven Wachse ausgewählt sind aus der Gruppe von Polyolefinwachsen, insbesondere Polyethylen- und Polypropylenwachsen, sowie auf dieser Basis modifizierten Wachsen.

7. Verfahren nach einem der voranstehenden Ansprüche, **dadurch gekennzeichnet, daß** das monomere Diisocyanat ein aliphatisches und/oder aromatisches Diisocyanat, insbesondere mit freien endständigen NCO-Gruppen, ist, insbesondere wobei das Diisocyanat ausgewählt sein kann aus der Gruppe von Diisocyanatodiphenylmethanen (MDIs), insbesondere 4,4'-Diisocyanatodiphenylmethan und 2,4'-Diisocyanatodiphenylmethan, sowie Mischungen verschiedener Diisocyanatodiphenylmethane; 1,5-Diisocyanatonaphthalin (NDI); Diisocyanatotoluolen (TDIs), insbesondere 2,4-Diisocyanatotoluol, sowie TDI-Urethdionen, insbesondere dimerem 1-Methyl-2,4-phenylen-diisocyanat (TDI-U), und TDI-Harnstoffen; 1-Isocyanato-3-isocyanatomethyl-3,5,5-trimethylcyclohexan (IPDI) und dessen Isomeren und Derivaten, insbesondere Di-, Tri- und Polymerisaten, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); sowie Mischungen und Prepolymeren der zuvor genannten Verbindungen.

8. Verfahren nach Anspruch 7, **dadurch gekennzeichnet, daß** das Diisocyanat ein unsymmetrisch substituiertes Diisocyanat ist, das zwei NCO-Gruppen unterschiedlicher Reaktivität aufweist, und/oder daß das Diisocyanat ein Gemisch aus 4,4'-Diisocyanatodiphenylmethan und 2,4'-Diisocyanatodiphenylmethan ist, vorzugsweise mit einem Gehalt an 2,4'-Diisocyanatodiphenylmethan von mehr als 20 Gew.-%, insbesondere mehr als 30 Gew.-%, bevorzugt mehr als 40 Gew.-%, ganz besonders bevorzugt mehr als 50 Gew.-%, bezogen auf das Diisocyanatgemisch, und/oder daß das Diisocyanat 2,4'-Diisocyanatodiphenylmethan ist und/oder daß das Diisocyanat ein maskiertes oder blockiertes Diisocyanat ist, welches insbesondere unter Wärme- und/oder Feuchtigkeitseinwirkung die blockierenden oder maskierenden Gruppen abspaltet, und/oder daß das Diisocyanat ein verkapseltes oder oberflächendesaktiviertes Isocyanat ist, insbesondere wobei die Verkapselung oder Oberflächendesaktivierung vorzugsweise bei Temperaturen oberhalb der Raumtemperatur aufbricht.

9. Verfahren nach einem der voranstehenden Ansprüche, **dadurch gekennzeichnet, daß** die Umsetzung in Schritt (a) in Gegenwart mindestens eines Katalysators abläuft, insbesondere wobei der Katalysator ausgewählt sein kann aus der Gruppe von in der Polyurethanchemie gängigen und bekannten Katalysatoren, nämlich organischen Zinnverbindungen wie Dibutylzinndilaurat (DBTL), Alkylmercaptidverbindungen des Dibutylzinns oder aber organischen Eisen-, Blei-, Cobalt-, Wismuth-, Antimon-, Zinkverbindungen und Mischungen der zuvor genannten Verbindungen sowie Katalysatoren auf Aminbasis wie tertiären Aminen, l,4-Diazabicyclo[2.2.2]octan und Dimorpholinodiethylether sowie deren Mischungen, insbesondere wobei der Gehalt an Katalysator 0,01 bis 5 Gew.-%, bezogen auf die Polyurethan-Zusammensetzung, beträgt.

10. Verfahren nach einem der voranstehenden Ansprüche, **dadurch gekennzeichnet, daß** das isocyanatterminierte Prepolymer in Schritt (b) erhältlich ist durch Umsetzung eines Di- oder Polyisocyanats mit mindestens einem isocyanatreaktiven Polymer, gefolgt von einer Entfernung des nichtreagierten Di- oder Polyisocyanats, vorzugsweise durch Verdampfen/Abdampfen des nichtreagierten Di- oder Polyisocyanats oder durch Strippen mit mono- oder difunktionellen isocyanatreaktiven Additiven wie Aminen, Alkoholen oder Mercaptanen.

11. Verfahren nach einem der voranstehenden Ansprüche, **dadurch gekennzeichnet, daß** das isocyanatterminierte Prepolymer vollkommen frei ist von monomerem Diisocyanat.

12. Verfahren nach einem der voranstehenden Ansprüche, **dadurch gekennzeichnet, daß** die Viskosität des isocyanatterminierten Prepolymers bei 20 °C mindestens 1.500 mPas, insbesondere mindestens 3.000 mPas, vorzugsweise mindestens 8.000 mPas, besonders bevorzugt mindestens 10.000 mPas, beträgt und/oder daß das isocyanatterminierte Prepolymer einen Gehalt an freien NCO-Gruppen von bis zu 3 Gew.-%, insbesondere 5 Gew.-%, vorzugsweise 10 Gew.-%, aufweist und/oder daß das isocyanatterminierte Prepolymer ausgewählt ist aus der Gruppe von MDI-Prepolymeren, TDI-Prepolymeren und MDI/TDI-Prepolymeren.

13. Verfahren nach einem der voranstehenden Ansprüche, **dadurch gekennzeichnet, daß** in Schritt (b) das oder die in Schritt (a) erhaltenen Umsetzungsprodukte mit mindestens 20 Gew.-%, insbesondere mindestens 25 Gew.-%, vorzugsweise mindestens 30 Gew.-% des monomerfreien isocyanatterminierten Prepolymers, bezogen auf das Umsetzungsprodukt, vermischt werden.

14. Verfahren nach einem der voranstehenden Ansprüche, **dadurch gekennzeichnet, daß** die Zusammensetzung mindestens 1 Gew.-%, insbesondere mindestens 2 Gew.-%, vorzugsweise mindestens 3 Gew.-% oder mehr, bezogen auf die in Schritt (b) erhaltene Gesamtzusammensetzung, freie NCO-Gruppen enthält, wobei hiervon höchstens 0,1 Gew.-% durch monomeres Diisocyanat zur Verfügung gestellt werden.

15. Verfahren zur Herstellung einer Polyurethan-Zusammensetzung mit einem geringen Gehalt an Diisocyanatmonomer(en),
wobei mindestens ein isocyanatreaktives Polymer, welches mindestens zwei isocyanatreaktive Gruppen pro Molekül besitzt und ein mittleres Molekulargewicht von 2.000 bis 8.000 g/mol aufweist, mit mindestens einem isocyanatterminierten Prepolymer, das im wesentlichen frei ist von Diisocyanatmonomer(en), umgesetzt wird in der Weise, daß die resultierende Polyurethan-Zusammensetzung weniger als 0,1 Gew.-% monomeres Diisocyanat, bezogen auf die Gesamtzusammensetzung, enthält,
wobei ein isocyanatterminiertes Prepolymer mit weniger als 0,1 Gew.-% monomerem Diisocyanat, bezogen auf das isocyanatterminierte Prepolymer, eingesetzt wird, welches einen Gehalt an freien NCO-Gruppen von bis zu 25 Gew.-% enthält, wobei das isocyanatterminierte Prepolymer ausgewählt ist aus der Gruppe von MDI-Prepolymeren, TDI-Prepolymeren und MDI/TDI-Prepolymeren und wobei die Viskosität des isocyanatterminierten Prepolymers bei 20 °C mindestens 1.500 mPas beträgt,
wobei die Umsetzung des isocyanatreaktiven Polymers mit dem isocyanatterminierten Prepolymer in Gegenwart nichtisocyanatreaktiver Bestandteile erfolgt, die ausgewählt sind aus der Gruppe von nichtisocyanatreaktiven Polymeren, Harzen, Wachsen, Füllstoffen, Additiven und/oder Lösemitteln, und
wobei nach der Umsetzung des isocyanatreaktiven Polymers mit dem isocyanatterminierten Prepolymer dem oder den Umsetzungsprodukt(en) weiteres isocyanatterminiertes Prepolymer zugesetzt wird.

16. Verfahren nach Anspruch 15, **dadurch gekennzeichnet, daß** die Umsetzung des isocyanatreaktiven Polymers mit dem isocyanatterminierten Prepolymer vorzugsweise in der Schmelze, insbesondere bei Temperaturen zwischen 50 und 160 °C, bevorzugt zwischen 100 und 150 °C, erfolgt und/oder daß die Einstellung des Gehalts an monomeren Diisocyanat(en) in der resultierenden Polyurethan-Zusammensetzung durch Auswahl des eingesetzten isocyanatterminierten Prepolymers, insbesondere durch Steuerung des Gehalts an monomeren Diisocyanat(en) im eingesetzten isocyanatterminierten Prepolymer, erfolgt.

17. Verfahren nach Anspruch 15 oder 16, **dadurch gekennzeichnet, daß** die Umsetzung des isocyanatreaktiven Polymers mit dem isocyanatterminierten Prepolymer in Gegenwart eines Überschusses an isocyanatterminiertem Prepolymer erfolgt.

18. Verfahren nach einem der Ansprüche 15 bis 17, **dadurch gekennzeichnet, daß** die Umsetzung des isocyanatreaktiven Polymers mit dem isocyanatterminierten Prepolymer in Gegenwart eines Überschusses an durch das isocyanatterminierte Prepolymer bereitgestellten NCO-Gruppen erfolgt, insbesondere wobei die Umsetzung derart durchgeführt wird, daß in der resultierenden Polyurethan-Zusammensetzung noch mindestens 0,5 Gew.-%, insbesondere 0,5 bis 5 Gew.-%, vorzugsweise 0,5 bis 3 Gew.-%, freie NCO-Gruppen vorhanden sind.

19. Verfahren nach einem der Ansprüche 15 bis 18, **dadurch gekennzeichnet, daß** das isocyanatreaktive Polymer mindestens zwei isocyanatreaktive H-Atome pro Molekül besitzt und/oder daß das isocyanatreaktive Polymer Hydroxyl-, Amino-, Carboxyl-, Carbonsäureanhydrid-, Mercapto-, Silyl- und/oder Carbonamidgruppen aufweist und/oder daß das isocyanatreaktive Polymer ein mittleres Molekulargewicht von 2.000 bis 5.000 g/mol aufweist und/oder daß sich das isocyanatreaktive Polymer ableitet von isocyanatreaktiven Polymeren und/oder Copolymeren und insbesondere ausgewählt sein kann aus der Gruppe von isocyanatreaktiven Polyestern, Polycaprolactonpolyestern, Polyethern, Polyurethanen, Polyamiden, Polytetrahydrofuranen, Polyacrylaten und Polymethacrylaten sowie deren Copolymeren und Mischungen, jeweils mit isocyanatreaktiven Gruppen, insbesondere Hydroxylfunktionen.

20. Verfahren nach einem der Ansprüche 15 bis 19, **dadurch gekennzeichnet, daß** das isocyanatreaktive Polymer ausgewählt ist aus der Gruppe von hydroxylfunktionalisierten Polymeren, insbesondere hydroxylfunktionalisierten Polyestern und/oder hydroxylfunktionalisierten Polyethern, vorzugsweise mit mindestens zwei Hydroxylgruppen je Molekül.

21. Verfahren nach einem der Ansprüche 15 bis 20, **dadurch gekennzeichnet, daß** die nichtisocyanatreaktiven Bestandteile homogen über das oder die Umsetzungsprodukte und/oder das isocyanatterminierte Prepolymer verteilt oder hiermit vermischt sind.

22. Verfahren nach einem der Ansprüche 15 bis 20, **dadurch gekennzeichnet, daß** die nichtisocyanatreaktiven Harze ausgewählt sind aus der Gruppe von aliphatischen, cyclischen oder cycloaliphatischen Kohlenwasserstoffharzen, Terpenphenolharzen, Cumaron-Indenharzen, α-Methylstyrolharzen, polymerisierten Tallharzestem oder Ketonaldehydharzen, insbesondere wobei die Harze eine niedrige Säurezahl, vorzugsweise mit Werten kleiner als 1 mg KOH/g, aufweisen, und/oder daß die nichtisocyanatreaktiven Polymere ausgewählt sind aus der Gruppe von (i) Ethylen/Vinylacetat-Polymeren oder -Copolymeren, insbesondere solchen mit Vinylacetat-Gehalten zwischen 12 und 40 Gew.-%, insbesondere 18 bis 28 Gew.-%, und/oder mit Schmelzindices (MFIs, DIN 53735) von 8 bis 800, insbesondere 150 bis 500; (ii) Polyolefinen, insbesondere mit mittleren Molekulargewichten von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C; und (iii) (Meth-)Acrylaten wie Styrol-(meth-)acrylaten sowie Mischungen dieser Verbindungen, und/oder daß die nichtisocyanatreaktiven Wachse ausgewählt sind aus der Gruppe von Polyolefinwachsen, insbesondere Polyethylen- und Polypropylenwachsen, sowie auf dieser Basis modifizierten Wachsen.

23. Verfahren nach einem der Ansprüche 15 bis 22, **dadurch gekennzeichnet, daß** die Umsetzung des isocyanatreaktiven Polymers mit dem isocyanatterminierten Prepolymer in Gegenwart mindestens eines Katalysators durchgeführt wird, insbesondere wobei der Katalysator ausgewählt sein kann aus der Gruppe von in der Polyurethanchemie gängigen und bekannten Katalysatoren, insbesondere organischen Zinnverbindungen wie Dibutylzinndilaurat (DBTL), Alkylmercaptidverbindungen des Dibutylzinns oder aber organischen Eisen-, Blei-, Cobalt-, Wismuth-, Antimon-, Zinkverbindungen und Mischungen der zuvor genannten Verbindungen sowie Katalysatoren auf Aminbasis wie tertiären Aminen, 1,4-Diazabicyclo[2.2.2]octan und Dimorpholinodiethylether sowie deren Mischungen, insbesondere wobei der Gehalt an Katalysator 0,01 bis 5 Gew.-%, bezogen auf die Polyurethan-Zusammensetzung, beträgt.

24. Verfahren nach einem der Ansprüche 15 bis 23, **dadurch gekennzeichnet, daß** das eingesetzte isocyanatterminierte Prepolymer erhältlich ist durch Umsetzung eines Di- oder Polyisocyanats mit mindestens einem isocyanatreaktiven Polymer, gefolgt von einer Entfernung des nichtreagierten Di- oder Polyisocyanats, vorzugsweise durch Verdampfen/Abdampfen des nichtreagierten Di- oder Polyisocyanats oder durch Strippen mit mono- oder difunktionellen isocyanatreaktiven Additiven wie Aminen, Alkoholen oder Mercaptanen.

25. Verfahren nach einem der Ansprüche 15 bis 24, **dadurch gekennzeichnet, daß** das isocyanatterminierte Prepolymer vollkommen frei ist von monomerem Diisocyanat und/oder daß die Viskosität des isocyanatterminierten Prepolymers bei 20 °C mindestens 3.000 mPas, vorzugsweise mindestens 8.000 mPas, besonders bevorzugt mindestens 10.000 mPas, beträgt.

26. Verfahren nach einem der Ansprüche 15 bis 25, **dadurch gekennzeichnet, daß** die resultierende Polyurethan-Zusammensetzung mindestens 0,5 Gew.-%, insbesondere mindestens 1 Gew.-%, vorzugsweise mindestens 2 Gew.-%, bevorzugt mindestens 3 Gew.-% oder mehr, besonders bevorzugt 0,5 bis 5 Gew.-%, bezogen auf resultierende Polyurethan-Zusammensetzung, freie NCO-Gruppen enthält, insbesondere wobei hiervon weniger als 0,1 Gew.-% durch monomere(s) Diisocyanat(e) zur Verfügung gestellt werden.

## Claims

1. Process for preparing a polyurethane composition having a low fraction of diisocyanate monomer(s), wherein in a first process step (a) at least one isocyanate-reactive polymer which possesses at least two isocyanate-reactive groups per molecule and has an average molecular weight of 2.000 to 8.000 g/mol is reacted with at least one monomeric diisocyanate, and wherein in a second process step (b) subsequently the reaction product or products obtained in step (a) is or are mixed with at least one isocyanate-terminated prepolymer, which is substantially free from diisocyanate monomers, in such a way that the resulting overall composition contains less than 0.1 % by weight of monomeric diisocyanate, based on the overall composition, an isocyanate-terminated prepolymer being used with not more than 0.1 % by weight of monomeric diisocyanate, based on the isocyanate-terminated prepolymer, and having a free NCO group content of up to 3 % by weight.

2. Process according to Claim 1, **characterized in that** the isocyanate-reactive polymer possesses at least two isocyanate-reactive H atoms per molecule, it being possible more particularly for the isocyanate-reactive polymer to contain hydroxyl, amino, carboxyl, carboxylic anhydride, mercapto, silyl and/or carboxamide groups.

3. Process according to Claim 1 or 2, **characterized in that** the reaction of the isocyanate-reactive polymer with the monomeric diisocyanate in step (a) takes place in the melt, more particularly at temperatures between 50 and 160 °C, preferably between 100 and 150 °C and/or **in that** the reaction of the isocyanate-reactive polymer with the monomeric diisocyanate in step (a) takes place in the presence of a small excess of the diisocyanate, the reaction in step (a) more particularly being carried out such that, in the mixture present after step (a) has been carried out, there is not more than 0.5 % by weight of free isocyanate groups present.

4. Process according to any one of the preceding claims, **characterized in that** the isocyanate-reactive polymer has an average molecular weight of 2.000 to 5.000 g/mol and/or **in that** the isocyanate-reactive polymer is derived from isocyanate-reactive polymers and/or copolymers and/or **in that** the isocyanate-reactive polymer is selected more particularly from the group consisting of isocyanate-reactive polyesters, polycaprolactone polyesters, polyethers, polyurethanes, polyamides, polytetrahydrofurans, polyacrylates and polymethacrylates and also their copolymers and mixtures, in each case with isocyanate-reactive groups, more particularly hydroxyl functions, and/or **in that** the isocyanate-reactive polymer is selected from the group consisting of hydroxyl-functionalized polymers, more particularly hydroxyl-functionalized polyesters and/or hydroxyl-functionalized polyethers, preferably having at least two hydroxyl groups per molecule.

5. Process according to any one of the preceding claims, **characterized in that** the reaction of the isocyanate-reactive polymers with the monomeric diisocyanate in step (a) and/or the mixing of the reaction product obtained in step (a) with the isocyanate-terminated prepolymer, this mixing being carried out in step (b), takes place in the presence of non-isocyanate-reactive constituents which are selected more particularly from the group consisting of non-isocyanate-reactive polymers, resins, waxes, fillers, additives and/or solvents and which are preferably homogeneously distributed over or mixed with the reaction product or products and/or the isocyanate-terminated prepolymer.

6. Process according to Claim 5, **characterized in that** the non-isocyanate-reactive resins are selected from the group consisting of aliphatic, cyclic or cycloaliphatic hydrocarbon resins, terpene-phenolic resins, coumarone-indene resins, α-methylstyrene resins, polymerized tall resin esters or ketone-aldehyde resins, the resins more particularly being able to have a low acid number, preferably with values smaller than 1 mg KOH/g, and/or in that the non-isocyanate-reactive polymers are selected from the group consisting of (i) ethylene/vinyl acetate polymers or copolymers, more particularly those having vinyl acetate contents between 12 % and 40 % by weight, more particularly 18 % to 28 % by weight, and/or having melt indices (MFIs, DIN 53735) of 8 to 800, more particularly 150 to 500; (ii) polyolefins, more particularly having average molecular weights of 5.000 to 25 000 g/mol, preferably 10.000 to 20.000 g/mol, and/or having ring- and-ball softening ranges between 80 and 170 °C, preferably between 80 and 130 °C; and (iii) (meth)acrylates such as styrene (meth)acrylates and also mixtures of these compounds, and/or **in that** the non-isocyanate-reactive waxes are selected from the group consisting of polyolefin waxes, more particularly polyethylene waxes and polypropylene waxes, and also modified waxes based thereon.

7. Process according to any one of the preceding claims, **characterized in that** the monomeric diisocyanate is an aliphatic and/or aromatic diisocyanate, more particularly having free terminal NCO groups, the diisocyanate more particularly being selectable from the group consisting of diiso-cyanato-diphenylmethanes (MDIs), more particularly 4,4'-diisocyanatodiphenylmethane and 2,4'-diisocyanatodiphenylmethane, and also mixtures of different diisocyanatodiphenylmethanes; 1,5-diisocyanatonaphth-alene (NDI); diisocyanatotoluenes (TDIs), more particularly 2,4-diisocyanato-toluene, and also TDI-uretdiones, more particularly dimeric 1-methyl-2,4-phenylene diisocyanate (TDI-U), and TDI-ureas; 1-isocyanato-3-isocyanatomethyl-3,5,5,trimethylcyclo-hexane (IPDI) and its isomers and derivatives, more particularly dimers, trimers and polymers, and also IPDI-isocyanurate (IPDI-T); 3,3'-dimethylbiphenyl 4,4'-diisocyanate (TODI); 3,3'-diisocyanato-4,4'-dimethyl-N,N'-diphenylurea (TDIH); and also mixtures and prepolymers of the aforementioned compounds.

8. Process according to Claim 7, **characterized in that** the diisocyanate is an asymmetrically substituted diisocyanate that contains two NCO groups of different reactivities, and/or **in that** the diisocyanate is a mixture of 4,4'-diisocyanatodiphenylmethane and 2,4'-diisocyanatodiphenylmethane, preferably with a 2,4'-diisocyanatodiphenylmethane content of more than 20 % by weight, more particularly more than 30 % by weight, preferably more than 40 % by weight, with very particular preference more than 50 % by weight, based on the diisocyanate mixture, and/or **in that** the diisocyanate is 2,4'-diisocyanatodiphenylmethane and/or **in that** the diisocyanate is a masked or blocked diisocyanate which eliminates the blocking or masking groups more particularly on exposure to heat and/or moisture, and/or **in that** the diisocyanate is an encapsulated or surface-deactivated isocyanate, the encapsulation or surface deactivation more particularly breaking down preferably at temperatures above room temperature.

9. Process according to any one of the preceding claims, **characterized in that** the reaction in step (a) proceeds in the presence of at least one catalyst, the catalyst more particularly being selectable from the group consisting of catalysts which are common and known in polyurethane chemistry, namely organic tin compounds such as dibutyltin dilaurate (DBTL), alkyl mercaptide compounds of dibutyltin or else organic iron, lead, cobalt, bismuth, antimony and zinc compounds and mixtures of the aforementioned compounds, and also amine-based catalysts such as tertiary amines, 1,4-diazabicyclo[2.2.2]octane and dimorpholinodiethyl ether and also mixtures thereof, the catalyst content being more particularly 0.01 % to 5 % by weight, based on the polyurethane composition.

10. Process according to any one of the preceding claims, **characterized in that** the isocyanate-terminated prepolymer in step (b) is obtainable by reaction of a diisocyanate or polyisocyanate with at least one isocyanate-reactive polymer, followed by removal of the unreacted diisocyanate or polyisocyanate, preferably by evaporating/evaporating off the unreacted diisocyanate or polyisocyanate or by stripping with monofunctional or difunctional isocyanate-reactive additives such as amines, alcohols or mercaptans.

11. Process according to any one of the preceding claims, **characterized in that** the isocyanate-terminated prepolymer is completely free from monomeric diisocyanate.

12. Process according to any one of the preceding claims, **characterized in that** the viscosity of the isocyanate-terminated prepolymer at 20 °C is at least 1500 mPas, more particularly at least 3.000 mPas, preferably at least 8.000 mPas, more preferably at least 10.000 mPas, and/or **in that** the isocyanate-terminated prepolymer has a free NCO group content of up to 3 % by weight, more particularly 5 % by weight, preferably 10 % by weight and/or **in that** the isocyanate-terminated prepolymer is selected from the group consisting of MDI prepolymers, TDI prepolymers and MDI/TDI prepolymers.

13. Process according to any one of the preceding claims, **characterized in that** in step (b) the reaction product or products obtained in step (a) is or are mixed with at least 20 % by weight, more particularly at least 25 % by weight, preferably at least 30 % by weight of the monomer-free, isocyanate-terminated prepolymer, based on the reaction product.

14. Process according to any one of the preceding claims, **characterized in that** the composition contains at least 1 % by weight, more particularly at least 2 % by weight, preferably at least 3 % by weight or more, based on the overall composition obtained in step (b), of free NCO groups, of which not more than 0.1 % by weight is provided by monomeric diisocyanate.

15. Process for preparing a polyurethane composition having a low fraction of diisocyanate monomer(s),
wherein at least one isocyanate-reactive polymer which possesses at least two isocyanate-reactive groups per molecule and has an average molecular weight of 2.000 to 8.000 g/mol is reacted with at least one isocyanate-terminated prepolymer, which is substantially free from diisocyanate monomer(s), in such a way that the resulting polyurethane composition contains less than 0.1 % by weight of monomeric diisocyanate, based on the overall composition,
wherein an isocyanate-terminated prepolymer is used with less than 0.1 % by weight of monomeric diisocyanate, based on the isocyanate-terminated prepolymer, and having a free NCO group content of up to 25 % by weight, wherein the isocyanate-terminated prepolymer is selected from the group consisting of MDI-prepolymers, TDI-prepolymers and MDI/TDI-prepolymers and wherein the viscosity of the isocyanate-terminated prepolymer at 20 °C is at least 1500 mPas,
wherein that the reaction of the isocyanate-reactive polymer with the isocyanate-terminated prepolymer takes place in the presence of non-isocyanate-reactive constituents which are selected from the group consisting of non-isocyanate-reactive polymers, resins, waxes, fillers, additives and/or solvents, and
wherein, after the isocyanate-reactive polymer has been reacted with the isocyanate-terminated prepolymer, further isocyanate-terminated prepolymer is added to the reaction product(s).

16. Process according to Claim 15, **characterized in that** the reaction of the isocyanate-reactive polymer with the isocyanate-terminated prepolymer takes place preferably in the melt, more particularly at temperatures between 50 and 160 °C, preferably between 100 and 150 °C, and/or **in that** the amount of monomeric diisocyanate(s) in the resulting polyurethane composition is set by selection of the isocyanate-terminated prepolymer used, more particularly by control of the amount of monomeric diisocyanate(s) in the isocyanate-terminated prepolymer used.

17. Process according to Claim 15 or 16, **characterized in that** the reaction of the isocyanate-reactive polymer with the isocyanate-terminated prepolymer takes place in the presence of an excess of isocyanate-terminated prepolymer.

18. Process according to any one of Claims 15 to 17, **characterized in that** the reaction of the isocyanate-reactive polymer with the isocyanate-terminated prepolymer takes place in the presence of an excess of NCO groups provided by the isocyanate-terminated prepolymer, the reaction more particularly being carried out such that, in the resulting polyurethane composition, there are still at least 0.5 % by weight, more particularly 0.5 % to 5 % by weight, preferably 0.5 % to 3 % by weight, of free NCO groups present.

19. Process according to any one of Claims 15 to 18, **characterized in that** the isocyanate-reactive polymer possesses at least two isocyanate-reactive H atoms per molecule and/or **in that** the isocyanate-reactive polymer contains hydroxyl, amino, carboxyl, carboxylic anhydride, mercapto, silyl and/or carboxamide groups and/or **in that** the isocyanate-reactive polymer has an average molecular weight of 2.000 to 5.000 g/mol and/or **in that** the isocyanate-reactive polymer is derived from isocyanate-reactive polymers and/or copolymers and more particularly may be selected from the group consisting of isocyanate-reactive polyesters, polycaprolactone polyesters, polyethers, polyurethanes, polyamides, polytetrahydrofurans, polyacrylates and polymethacrylates and also their copolymers and mixtures, in each case having isocyanate-reactive groups, more particularly hydroxyl functions.

20. Process according to any one of Claims 15 to 19, **characterized in that** the isocyanate-reactive polymer is selected from the group consisting of hydroxyl-functionalized polymers, more particularly hydroxyl-functionalized polyesters and/or hydroxyl-functionalized polyethers, preferably having at least two hydroxyl groups per molecule.

21. Process according to any one of Claims 15 to 20, **characterized in that** the non-isocyanate-reactive are homogeneously distributed over or mixed with the reaction product or products and/or the isocyanate-terminated prepolymer.

22. Process according to any one of Claims 15 to 20, **characterized in that** the non-isocyanate-reactive resins are selected from the group consisting of aliphatic, cyclic or cycloaliphatic hydrocarbon resins, terpene-phenolic resins, coumarone-indene resins, α-methylstyrene resins, polymerized tall resin esters or ketone-aldehyde resins, the resins more particularly having a low acid number, preferably with values smaller than 1 mg KOH/g, and/or in that the non-isocyanate-reactive polymers are selected from the group consisting of (i) ethylene/vinyl acetate polymers or copolymers, more particularly those having vinyl acetate contents between 12 % and 40 % by weight, more particularly 18 % to 28 % by weight, and/or having melt indices (MFIs, DIN 53735) of 8 to 800, more particularly 150 to 500; (ii) polyolefins, more particularly having average molecular weights of 5.000 to 25 000 g/mol, preferably 10.000 to 20.000 g/mol, and/or having ring- and-ball softening ranges between 80 and 170 °C, preferably between 80 and 130 °C; and (iii) (meth)acrylates such as styrene (meth)acrylates and also mixtures of these compounds, and/or **in that** the non-isocyanate-reactive waxes are selected from the group consisting of polyolefin waxes, more particularly polyethylene waxes and polypropylene waxes, and also modified waxes based thereon.

23. Process according to any one of Claims 15 to 22, **characterized in that** the reaction of the isocyanate-reactive polymer with the isocyanate-terminated prepolymer is carried out in the presence of at least one catalyst, the catalyst more particularly being selectable from the group consisting of catalysts which are common and known in polyurethane chemistry, more particularly organic tin compounds such as dibutyltin dilaurate (DBTL), alkyl mercaptide compounds of dibutyltin or else organic iron, lead, cobalt, bismuth, antimony and zinc compounds and mixtures of the aforementioned compounds, and also amine-based catalysts such as tertiary amines, 1,4-diazabi-cyclo[2.2.2]octane and dimorpholinodiethyl ether and also mixtures thereof, the catalyst content being more particularly 0.01 % to 5 % by weight, based on the polyurethane composition.

24. Process according to any one of Claims 15 to 23, **characterized in that** the isocyanate-terminated prepolymer used is obtainable by reaction of a diisocyanate or polyisocyanate with at least one isocyanate-reactive polymer, followed by removal of the unreacted diisocyanate or polyisocyanate, preferably by evaporating/evaporating off the unreacted diisocyanate or polyisocyanate or by stripping with monofunctional or difunctional isocyanate-reactive additives such as amines, alcohols or mercaptans.

25. Process according to any one of Claims 15 to 24, **characterized in that** the isocyanate-terminated prepolymer is completely free from monomeric diisocyanate and/or **in that** the viscosity of the isocyanate-terminated prepolymer at 20 °C is at least 3.000 mPas, preferably at least 8.000 mPas, more preferably at least 10.000 mPas.

26. Process according to any one of Claims 15 to 25, **characterized in that** the resulting polyurethane composition contains at least 0.5 % by weight, more particularly at least 1 % by weight, preferably at least 2 % by weight, more preferably at least 3 % by weight or more, with particular preference 0.5 % to 5 % by weight, based on resulting polyurethane composition, of free NCO groups, of which more particularly less than 0.1 % by weight is provided by monomeric diisocyanate(s).

## Revendications

1. Procédé pour la préparation d'une composition de polyuréthane avec une proportion limitée de monomère(s) de diisocyanate, dans lequel, au cours d'une première étape de procédé (a), on fait réagir au moins un polymère réactif à l'isocyanate, qui possède au moins deux groupes réactifs à l'isocyanate par molécule et présente un poids moléculaire moyen de 2.000 à 8.000 g/mole, avec au moins un diisocyanate monomère et dans lequel, au cours d'une deuxième étape de procédé (b) le ou les produit(s) réactionnel(s) obtenu(s) dans l'étape (a) est(sont) mélangé(s) avec au moins un prépolymère à terminaison isocyanate, qui est essentiellement exempt de monomères d'isocyanate, de manière à ce que la composition globale résultante contienne moins de 0,1 % en poids de diisocyanate monomère, par rapport à la composition globale, dans lequel un prépolymère à terminaison isocyanate est mis en œuvre avec au maximum 0,1 % en poids de diisocyanate monomère, par rapport au prépolymère à terminaison isocyanate, lequel présente une teneur en groupes NCO libres de 3 % en poids maximum.

2. Procédé suivant la revendication 1, **caractérisé en ce que** le polymère réactif à l'isocyanate possède au moins deux atomes d'hydrogène réactifs à l'isocyanate par molécule, en particulier dans lequel le polymère réactif à l'isocyanate peut présenter des groupes hydroxyle, amino, carboxyle, anhydride carboxylique, mercapto, silyle et/ou carbonamide.

3. Procédé suivant la revendication 1 ou 2, **caractérisé en ce que** la réaction du polymère réactif à l'isocyanate avec le diisocyanate monomère a lieu au cours de l'étape (a) dans la fusion, en particulier à des températures comprises entre 50 et 160 °C, de préférence entre 100 et 150 °C, et/ou **en ce que** la réaction du polymère réactif à l'isocyanate avec le diisocyanate monomère a lieu au cours de l'étape (a) en présence d'un léger excès de diisocyanate, en particulier dans lequel la réaction au cours de l'étape (a) est exécutée de manière telle que dans le mélange présent après l'exécution de l'étape (a), au maximum 0,5 % en poids de groupes isocyanate libres est présent.

4. Procédé suivant l'une des revendications qui précèdent, **caractérisé en ce que** le polymère réactif à l'isocyanate présente un poids moléculaire moyen de 2.000 à 5.000 g/mole et/ou **en ce que** le polymère réactif à l'isocyanate dérive de polymères réactifs à l'isocyanate et/ou de copolymères et/ou **en ce que** le polymère réactif à l'isocyanate est sélectionné en particulier à partir du groupe de polyesters, polyesters de polycaprolactone, polyéthers, polyuréthanes, polyamides, polytétrahydrofuranes, polyacrylates et polyméthacrylates réactifs à l'isocyanate, ainsi que de leurs copolymères et mélanges, dans chaque cas avec des groupes réactifs à l'isocyanate, en particulier des fonctions hydroxyle et/ou **en ce que** le polymère réactif à l'isocyanate est sélectionné parmi le groupe de polymères fonctionnalisés par un hydroxyle, en particulier de polyesters fonctionnalisés par un hydroxyle et/ou de polyéthers fonctionnalisés par un hydroxyle, de préférence avec au moins deux groupes hydroxyle par molécule.

5. Procédé suivant l'une des revendications qui précèdent, **caractérisé en ce que** la réaction du polymère réactif à l'isocyanate avec le diisocyanate monomère a lieu au cours de l'étape (a) et/ou le mélange exécuté au cours de l'étape (b) du produit réactionnel obtenu au cours de l'étape (a) avec le prépolymère à terminaison isocyanate a lieu en présence de composants non réactifs à l'isocyanate, lesquels sont en particulier sélectionnés dans le groupe de polymères, résines, cires, matières de charge, additifs et/ou solvants non réactifs à l'isocyanate et qui sont de préférence distribués de manière homogène sur le ou les produit(s) réactionnel(s) et/ou le prépolymère à terminaison isocyanate ou mélangés avec ceux-ci.

6. Procédé suivant la revendication 5, **caractérisé en ce que** les résines non réactives à l'isocyanate sont sélectionnées parmi le groupe de résines d'hydrocarbures aliphatiques, cycliques ou cycloaliphatiques, de résines terpène-phénol, de résines cumarone-indène, de résines α-méthylstyrène, d'esters de résines d'huile de pin polymérisées ou de résines cétone-aldéhyde, en particulier dans lequel les résines peuvent présenter un indice d'acide faible, de préférence avec des valeurs inférieures à 1 mg KOH/g et/ou **en ce que** les polymères non réactifs à l'isocyanate sont sélectionnés parmi le groupe (i) des polymères ou copolymères éthylène/vinylacétate, en particulier ceux avec des teneurs en vinylacétate comprises entre 12 et 40 % en poids, en particulier 18 à 28 % en poids et/ou avec des indices de fusion (MFI, DIN 53735) de 8 à 800, en particulier de 150 à 500 ; (ii) des polyoléfines, en particulier avec des poids moléculaires moyens de 5.000 à 25 000 g/mole, de préférence 10.000 à 20.000 g/mole, et/ou avec des domaines de ramollissement selon bague et bille compris entre 80 et 170 °C, de préférence entre 80 et 130 °C ; et (iii) des (méth)acrylates comme des (méth)acrylates de styrène, de même que des mélanges de ces composés et/ou **en ce que** les cires non réactives à l'isocyanate sont sélectionnées parmi le groupe de cires de polyoléfine, en particulier de cires de polyéthylène et de polypropylène, ainsi que de cires modifiées sur cette base.

7. Procédé suivant l'une des revendications qui précèdent, **caractérisé en ce que** le diisocyanate monomère est un diisocyanate aliphatique et/ou aromatique, en particulier avec des groupes NCO à extrémité libre, en particulier **en ce que** le diisocyanate peut être sélectionné à partir du groupe de méthanes diisocyanatodiphényliques (MDI) en particulier de méthane 4,4'-diisocyanatodiphénylique et de méthane 2,4'-diisocyanatodiphénylique, de même que de mélanges de différents méthanes diisocyanatodiphényliques ; de 1,5-diisocyanatonaphtaline (NDI) ; de diisocyanato-toluènes (TDI), en particulier de 2,4-diisocyanatotoluène, de même que d'uréthdiones TDI, en particulier de 1-méthyl-2,4-phénylène-diisocyanate dimère (TDI-U) et d'urées TDI ; de 1-isocyanate-3-isocyanatométhyl-3,5,5-triméthylcyclohexane (IPDI) et ses isomères et dérivés, en particulier de dimérisates, trimérisates et polymérisates, de même que d'isocyanurate IPDI(IPDI-T) ; de 3,3'-diméthylbiphényl-4,4'-diisocyanate (TODI) ; de 3,3'-diisocyanato-4,4'-diméthyl-N,N'-diphénylurée (TDIH) ; de même que des mélanges et prépolymères des composés susdits.

8. Procédé suivant la revendication 7, **caractérisé en ce que** le diisocyanate est un diisocyanate asymétriquement substitué, qui présente deux groupes NCO à réactivité différente, et/ou **en ce que** le diisocyanate est un mélange de 4,4'-diisocyanatodiphénylméthane et de 2,4'-diisocyanatodiphénylméthane, de préférence avec une teneur en 2,4'-diisocyanatodiphénylméthane supérieure à 20 % en poids, en particulier supérieure à 30 % en poids, de préférence supérieure à 40 % en poids et mieux encore supérieure à 50 % en poids, par rapport au mélange de diisocyanates et/ou en ce que le diisocyanate est un 2,4'-diisocyanatodiphénylméthane et/ou **en ce que** le diisocyanate est un diisocyanate masqué ou bloqué, qui sépare en particulier, sous l'effet de la chaleur et/ou de l'humidité, les groupes bloquants ou les groupes masquants et/ou **en ce que** le diisocyanate est un isocyanate encapsulé ou désactivé en surface, en particulier **en ce que** l'encapsulage ou la désactivation en surface se déclenche de préférence à des températures supérieures à la température ambiante.

9. Procédé suivant l'une des revendications qui précèdent, **caractérisé en ce que** la réaction au cours de l'étape (a) se déroule en présence d'au moins un catalyseur, en particulier **en ce que** le catalyseur peut être sélectionné à partir du groupe de catalyseurs courants et connus dans la chimie des polyuréthanes, à savoir des composés stanniques organiques comme le dilaurate stannique de dibutyle (DBTL), des composés d'alkyle mercaptide du dibutylétain, mais aussi des composés organiques du fer, du plomb, du cobalt, du bismuth, de l'antimoine, du zinc ou des mélanges des composés susdits, ainsi que de catalyseurs à base d'amine comme des amines tertiaires, du 1,4-diazabicyclo[2,2,2]octane et du dimorpholinodiéthyléther, ainsi que leurs mélanges, en particulier dans lequel la teneur en catalyseur est de 0,01 à 5 % en poids par rapport à la composition du polyuréthane.

10. Procédé suivant l'une des revendications qui précèdent, **caractérisé en ce que** le prépolymère à terminaison isocyanate peut être obtenu au cours de l'étape (b) en faisant réagir un diisocyanate ou un polyisocyanate avec au moins un polymère réactif à l'isocyanate, suivi par une élimination du diisocyanate ou du polyisocyanate non réagi, de préférence par évaporation/vaporisation du diisocyanate ou du polyisocyanate non réagi par strippage avec des additifs monofonctionnels ou difonctionnels réactifs à l'isocyanate, comme des amines, des alcools ou des mercaptans.

11. Procédé selon l'une des revendications qui précèdent, **caractérisé en ce que** le prépolymère à terminaison isocyanate est totalement exempt de diisocyanate monomère.

12. Procédé suivant l'une des revendications qui précèdent, **caractérisé en ce que** la viscosité du prépolymère à terminaison isocyanate à 20 °C est d'au moins 1500 mPas, en particulier au moins 3.000 mPas, de préférence au moins 8.000 mPas, mieux encore au moins 10.000 mPas et/ou **en ce que** le prépolymère à terminaison isocyanate présente une teneur en groupes NCO libres de maximum 3 % en poids, en particulier 5 % en poids, de préférence 10 % en poids et/ou **en ce que** le prépolymère à terminaison isocyanate est sélectionné parmi le groupe de prépolymères MDI, de prépolymères TDI et de prépolymères MDI/TDI.

13. Procédé suivant l'une des revendications qui précèdent, **caractérisé en ce qu'**au cours de l'étape (b), le ou les produit(s) réactionnel(s) obtenu(s) au cours de l'étape (a) est(sont) mélangé(s) avec au moins 20 % en poids, en particulier au moins 25 % en poids, de préférence au moins 30 % en poids du prépolymère à terminaison isocyanate exempt de monomère par rapport au produit réactionnel.

14. Procédé suivant l'une des revendications qui précèdent, **caractérisé en ce que** la composition contient au moins 1 % en poids, en particulier au moins 2 % en poids, de préférence au moins 3 % en poids ou plus, par rapport à la composition globale obtenue au cours de l'étape (b), de groupes NCO libres, 0,1 % en poids maximum de ceux-ci étant mis à disposition par le diisocyanate monomère.

15. Procédé pour la préparation d'une composition de polyuréthane avec une teneur faible en monomère(s) de diisocyanate,
dans lequel au moins un polymère réactif à l'isocyanate, qui possède au moins deux groupes réactifs à l'isocyanate par molécule et présente un poids moléculaire moyen de 2.000 à 8.000 g/mole, avec au moins un prépolymère à terminaison isocyanate, qui est essentiellement exempt de monomère(s) de diisocyanate, est transformé de manière à ce que la composition de polyuréthane résultante contienne moins de 0,1 % en poids de diisocyanate monomère, par rapport à la composition globale,
dans lequel un prépolymère à terminaison isocyanate est mis en œuvre avec moins de 0,1 % en poids de diisocyanate monomère, par rapport au prépolymère à terminaison isocyanate, qui contient une teneur en groupes NCO libres de 25 % en poids maximum, le prépolymère à terminaison isocyanate étant sélectionné parmi le groupe de prépolymères MDI, de prépolymères TDI et de prépolymères MDI/TDI et la viscosité du prépolymère à terminaison isocyanate à 20 °C étant d'au moins 1500 mPas,
dans lequel la réaction du polymère réactif à l'isocyanate a lieu avec le prépolymère à terminaison isocyanate en présence de composants non réactifs à l'isocyanate, qui sont sélectionnés dans le groupe de polymères, résines, cires, matières de charge, additifs et/ou solvants non réactifs à l'isocyanate, et
dans lequel, après la réaction du polymère réactif à l'isocyanate avec le prépolymère à terminaison isocyanate, un autre prépolymère à terminaison isocyanate est ajouté au(x) produit(s) réactionnel(s).

16. Procédé suivant la revendication 15, **caractérisé en ce que** la réaction du polymère réactif à l'isocyanate avec le prépolymère à terminaison isocyanate a lieu préférentiellement dans la fusion, en particulier à des températures comprises entre 50 et 160 °C, de préférence entre 100 et 150 °C et/ou **en ce que** l'ajustement de la teneur en diisocyanate(s) monomère(s) dans la composition de polyuréthane résultante a lieu par sélection du prépolymère à terminaison isocyanate mis en œuvre, en particulier par guidage de la teneur en diisocyanate(s) monomère(s) dans le prépolymère à terminaison isocyanate mis en œuvre.

17. Procédé suivant la revendication 15 ou 16, **caractérisé en ce que** la réaction du polymère réactif à l'isocyanate avec le prépolymère à terminaison isocyanate a lieu en présence d'un excès de prépolymère à terminaison isocyanate.

18. Procédé suivant l'une des revendications 15 à 17, **caractérisé en ce que** la réaction du polymère réactif à l'isocyanate avec le prépolymère à terminaison isocyanate a lieu en présence d'un excès de groupes NCO mis à disposition par le prépolymère à terminaison isocyanate, en particulier **en ce que** la réaction est exécutée d'une manière telle que dans la composition de polyuréthane résultante, au moins encore 0,5 % en poids, en particulier 0,5 à 5 % en poids, de préférence 0,5 à 3 % en poids, de groupes NCO libres sont présents.

19. Procédé suivant l'une des revendications 15 à 18, **caractérisé en ce que** le polymère réactif à l'isocyanate possède au moins deux atomes d'hydrogène réactifs à l'isocyanate par molécule et/ou **en ce que** le polymère réactif à l'isocyanate présente des groupes hydroxyle, amino, carboxyle, anhydride carboxylique, mercapto, silyle et/ou carbonamide et/ou **en ce que** le polymère réactif à l'isocyanate présente un poids moléculaire moyen de 2.000 à 5.000 g/mole et/ou **en ce que** le polymère réactif à l'isocyanate est dérivé de polymères et/ou de copolymères réactifs à l'isocyanate et peut être sélectionné en particulier dans le groupe de polyesters, polyesters de polycaprolactone, polyéthers, polyuréthanes, polyamides, polytétrahydrofuranes, polyacrylates et polyméthacrylates réactifs à l'isocyanate, de même que leurs copolymères et mélanges, dans chaque cas avec des groupes réactifs à l'isocyanate, en particulier des fonctions hydroxyle.

20. Procédé suivant l'une des revendications 15 à 19, **caractérisé en ce que** le polymère réactif à l'isocyanate est sélectionné dans le groupe de polymères fonctionnalisés par un hydroxyle, en particulier de polyesters fonctionnalisés par un hydroxyle et/ou de polyéthers fonctionnalisés par un hydroxyle, de préférence avec au moins deux groupes hydroxyle par molécule.

21. Procédé suivant l'une des revendications 15 à 20, **caractérisé en ce que** les composants non réactifs à l'isocyanate sont distribués de manière homogène sur le ou les produit(s) réactionnel(s) et/ou le prépolymère à terminaison isocyanate ou mélangés avec ceux-ci.

22. Procédé suivant l'une des revendications 15 à 20, **caractérisé en ce que** les résines non réactives à l'isocyanate sont sélectionnées parmi le groupe de résines d'hydrocarbures aliphatiques, cycliques ou cycloaliphatiques, de résines terpène-phénol, de résines cumarone-indène, de résines α-méthylstyrène, d'esters de résines d'huile de pin polymérisées ou de résines de cétone-aldéhyde, en particulier dans lequel les résines présentent un indice d'acide bas, de préférence avec des valeurs inférieures à 1 mg KOH/g, et/ou **en ce que** les polymères non réactifs à l'isocyanate sont sélectionnés parmi le groupe (i) des polymères ou copolymères éthylène/vinylacétate, en particulier ceux avec des teneurs en vinylacétate comprises entre 12 et 40 % en poids, en particulier 18 à 28 % en poids, et/ou avec des indices de fusion (MFI, DIN 53735) de 8 à 800, en particulier de 150 à 500 ; (ii) des polyoléfines, en particulier avec des poids moléculaires moyens de 5.000 à 25 000 g/mole, de préférence 10.000 à 20.000 g/mole et/ou avec des domaines de ramollissement selon bague et bille compris entre 80 et 170 °C, de préférence entre 80 et 130 °C ; et (iii) des (méth)acrylates comme des (méth)acrylates de styrène, de même que des mélanges de ces composés, et/ou **en ce que** les cires non réactives à l'isocyanate sont sélectionnées parmi le groupe de cires de polyoléfine, en particulier de cires de polyéthylène et de polypropylène, ainsi que de cires modifiées sur cette base.

23. Procédé suivant l'une des revendications 15 à 22, **caractérisé en ce que** la réaction du polymère réactif à l'isocyanate avec le prépolymère à terminaison isocyanate est exécutée en présence d'au moins un catalyseur, en particulier **en ce que** le catalyseur peut être sélectionné à partir du groupe de catalyseurs courants et connus dans la chimie des polyuréthanes, en particulier des composés stanniques organiques comme le dilaurate stannique du dibutyle (DBTL), les composés d'alkyle mercaptide de dibutylétain de dibutyle, mais aussi des composés organiques du fer, du plomb, du cobalt, du bismuth, de l'antimoine et du zinc ou des mélanges des composés susdits, ainsi que de catalyseurs à base d'amine comme des amines tertiaires, du 1,4-diazabicyclo[2,2,2]octane et du dimorpholinodiéthyléther, ainsi que leurs mélanges, en particulier dans lequel la teneur en catalyseur est de 0,01 à 5 % en poids par rapport à la composition du polyuréthane.

24. Procédé suivant l'une des revendications 15 à 23, **caractérisé en ce que** le prépolymère à terminaison isocyanate mis en œuvre peut être obtenu en faisant réagir un diisocyanate ou un polyisocyanate avec au moins un polymère réactif à l'isocyanate, suivi d'une élimination du diisocyanate ou du polyisocyanate non réagi, de préférence par évaporation/vaporisation du diisocyanate ou du polyisocyanate non réagi ou par strippage avec des additifs réactifs à l'isocyanate monofonctionnels ou difonctionnels, comme des amines, des alcools ou des mercaptans.

25. Procédé suivant l'une des revendications 15 à 24, **caractérisé en ce que** le prépolymère à terminaison isocyanate est totalement exempt de diisocyanate monomère et/ou **en ce que** la viscosité du prépolymère à terminaison isocyanate à 20 °C est d'au moins 3.000 mPas, de préférence d'au moins 8.000 mPas, mieux encore d'au moins 10.000 mPas.

26. Procédé suivant l'une des revendications 15 à 25, **caractérisé en ce que** la composition de polyuréthane résultante contient au moins 0,5 % en poids, en particulier au moins 1 % en poids, de préférence au moins 2 % en poids, plus encore au moins 3 % en poids et mieux encore 0,5 à 5 % en poids par rapport à la composition de polyuréthane résultante, de groupes NCO libres, en particulier **en ce que** moins de 0,1 % en poids est mis à disposition par un(des) diisocyanate(s) monomère(s).
